Europäisches Patentamt

European Patent Office

Office européen des brevets

(11) Veröffentlichungsnummer : **0 385 145 B1**

# (12) EUROPÄISCHE PATENTSCHRIFT

(45) Veröffentlichungstag der Patentschrift :
**19.04.95 Patentblatt 95/16**

(21) Anmeldenummer : **90102365.5**

(22) Anmeldetag : **07.02.90**

(51) Int. Cl.⁶ : **H01M 10/44,** H02J 7/04

---

## (54) **Verfahren zum Laden eines Bleiakkumulators.**

(30) Priorität : **28.02.89 DE 3906147**
**25.03.89 DE 3909870**

(43) Veröffentlichungstag der Anmeldung :
**05.09.90 Patentblatt 90/36**

(45) Bekanntmachung des Hinweises auf die
Patenterteilung :
**19.04.95 Patentblatt 95/16**

(84) Benannte Vertragsstaaten :
**AT DE ES FR GB IT NL SE**

(56) Entgegenhaltungen :
**EP-A- 0 055 349**
**DE-A- 3 507 223**
**FR-A- 2 239 773**
**PATENT ABSTRACTS OF JAPAN vol. 12, no. 7**
**(E-571)(2854) 9. Januar 1988**

(73) Patentinhaber : **VARTA Batterie**
**Aktiengesellschaft**
**Postfach 5 40,**
**Am Leineufer 51**
**D-30405 Hannover (DE)**

(72) Erfinder : **Horn, Karl Georg, Dr., Dipl.-Phys.**
**An den Römergärten 16**
**D-6233 Kelkheim (DE)**
Erfinder : **Gütlich, Karl-Friedrich, Dr.,**
**Dipl.-Phys.**
**Oppenheimer Strasse 45**
**D-6000 Frankfurt 70 (DE)**

(74) Vertreter : **Kaiser, Dieter Ralf, Dipl.-Ing.**
**Gundelhardtstrasse 72**
**D-65779 Kelkheim (DE)**

# Beschreibung

Die Erfindung betrifft ein Verfahren zur Ladung einer Akkumulatorenbatterie des Blei-Säure-Typs mit einem frei beweglichen Elektrolyten, bei dem der Ladestrom jeweils bei Erreichen einer Gasungsspannung stufenweise vermindert wird.

Bekannte wartungsfreie Bleiakkumulatoren arbeiten gewöhnlich mit einer unterschüssigen Elektrolytmenge, die in den Separatoren und teilweise im Porensystem der Elektrodenplatten festgehalten oder auch durch Gelbildung immobilisiert ist. Da die Poren des Separatormaterials und der aktiven Elektrodenmassen nur zum Teil mit Elektrolyt gefüllt sind, stehen dem bei der Ladung an den positiven Elektroden entwickelten Sauerstoffgas hinreichend Transportwege zur Verfügung, über die es zu den negativen Elektroden gelangt, an denen der Sauerstoff reduziert wird. Die Förderung des Sauerstoffverzehrs durch das Freiliegen weiter Flächenbereiche, insbesondere der negativen Elektroden, die mit Gas und Elektrolyt im Dreiphasengleichgewicht stehen, verhindert den Aufbau eines unzulässig hohen Innendrucks in dem gegen Flüssigkeitsaustritt abgedichteten Gehäuse.

Derartige Batterien mit festgelegtem Elektrolyten erweisen sich in der Praxis als empfindlich gegen Überladungen, die zu irreparablen Schädigungen führen, da eine Wassernachfüllung nicht möglich ist.

Konventionelle Bleiakkumulatoren mit einem Überschuß an freier Schwefelsäure, in welche die Elektroden vollständig eintauchen, lassen sich aus naheliegenden Gründen nur auf umständliche Weise mit Sauerstoffverzehr betreiben, indem der Sauerstoff z.B. über dem Elektrolytraum gesammelt und von dort mittels Pumpe und Leitungen unter den Elektrodenblock gedrückt wird, von wo er aus Öffnungen gezielt an den negativen Platten vorbei wieder nach oben steigt. Infolge der völligen Benetzung der Platten mit Elektrolyt ist hier der Sauerstoffverzehr sehr klein und die Wirkung dieser Maßnahme daher begrenzt.

Ein Weg, um Gasbildung schon wegen des unnötigen Energieverlustes überhaupt zu vermeiden, bietet sich über das Ladeverfahren an.

Ziel aller Ladeverfahren ist es, in möglichst kurzer Zeit eine vollständige Aufladung der Batterie zu erreichen. Dies geschieht meist in mehreren Stufen, z.B. nach einer IUI-Kennlinie, wobei man, gegebenenfalls unter Inkaufnahme früh einsetzender Gasung, zunächst mit einem relativ hohen, konstanten Strom auflädt, bis die Batteriespannung den eigentlichen Wert der Gasungsspannung -bei Bleiakkumulatoren 2,4 Volt/Zelle- erreicht hat. Von da ab wird die Spannung konstant gehalten, wobei der Ladestrom wegen der weiter wachsenden Gegenspannung abfällt. Die zweite Ladestufe ist beendet, wenn der Ladestrom bis auf den sogenannten Nachladestrom, der nur noch einen Bruchteil des Anfangsladestroms beträgt, abgesunken ist. Mit dem nunmehr konstant gehaltenen Nachladestrom, der einen erneuten Anstieg der Ladespannung bewirkt, wird in der dritten Ladestufe eine zeitbegrenzte Nachladung durchgeführt.

Es sind nun sowohl bei Bleiakkumulatoren als auch bei alkalischen Akkumulatoren Ladetechniken (vg. z.B. DE-PS 1 233 934 oder DE-PS 1800 230) bekannt, denen zufolge die Ladungsaufnahme während der ersten Phase offenbar effektiver ist, wenn die spannungsgesteuerte Konstantstromladung stufenweise, nämlich mit einem herabgesetzten Ladestrom in einer zweiten Phase, durchgeführt wird. Solche Ladeverfahren sind auch der DE-OS 35 07 223 zu entnehmen. Dort ist insbesondere vorgeschlagen, den Ladestrom in mehreren Stufen, beispielsweise entsprechend einer Exponentialfunktion, herabzusetzen.

Der Erfindung liegt die Aufgabe zugrunde, ein Ladeverfahren für Bleibatterien, insbesondere eine "maßgeschneiderte" Ladevorschrift anzugeben, die es möglich macht, die Bleibatterie quasi wartungsfrei zu betreiben.

Die Aufgabe wird erfindungsgemäß durch ein Ladeverfahren gelöst, wie es in Patentanspruch 1 definiert ist.

Die Unteransprüche betreffen bevorzugte Ausführungsformen des Verfahrens.

Bei dem neuen Verfahren wird ohne die weiter oben erwähnte Nachladung eine vollständige und kapazitätsstabile Wiederaufladung auch solcher Batterien erreicht, die im zyklischen Lade / Entladebetrieb gelegentlich oder wiederholt erschöpfend entladen wurden, d.h. bis zu 100% ihrer Nennkapazität abgegeben haben. Erfindungsgemäß gelingt dies mit Unterstützung durch eine zumindest intervallmäßige Elektrolytumwälzung während der Ladeperioden dadurch, daß in einer ersten Ladestufe mit einem relativ hohen Konstantstrom $i_1$, wobei

$$1 \cdot I_5 \leqq i_1 \leqq 2 \cdot I_5 \text{ oder } 0,2 \text{ CA} \leqq i_1 \leqq 0,4 \text{ CA},$$
bis zu einem ersten Spannungsgrenzwert

$$U_1 = 2,30 + / - 0,05 \text{ Volt/Zelle}$$
geladen wird. (Die Höhe des Ladestromes läßt sich auf zweierlei Weise angeben: entweder als Vielfaches oder als Bruchteil eines kapazitätsbezogenen Nennstromes I, hier des fünfstündigen Nennstromes $I_5$, oder in CA (=Capacity Ampere), d.h. durch einen Bruchteil oder ein Vielfaches der in A ausgedrückten Nennkapazität C).

Vorzugsweise soll $i_1$ bei ca. $1,25 \cdot I_5$ bzw. 0,25 CA liegen.

In einer zweiten Ladestufe wird darauf mit vermindertem Konstantstrom $i_2$, wobei

$$0,3 \cdot I_5 \leqq i_2 \leqq 1 \cdot i_5 \text{ oder } 0,07 \text{ CA} \leqq i_2 \leqq 0,2 \text{ CA},$$
bis zu einem zweiten Spannungsgrenzwert

$$U_2 = 2,40 + / - 0,05 \text{ Volt/Zelle}$$

weitergeladen. Der vorzugsweise Ladestrom $i_2$ liegt hier bei ca. $0,75 \cdot I_5$ bzw. 0,15 CA.

Unter Festhalten des erreichten zweiten Spannungsgrenzwertes $U_2$ schließlich folgt als dritte Ladestufe eine Konstantspannungsladung mit abklingendem Ladestrom, die durch ein Zeitschaltwerk beendet wird.

Als Abschaltkriterium gilt erfindungsgemäß ein Abfall des Ladestromes auf einen Wert zwischen $0,1 \cdot I_5$ und $0,4 \cdot I_5$, vorzugsweise etwa $0,25 \cdot I_5$. Das entspricht einem Strom $i = 0,05$ CA, also einem 20-stündigen Strom.

Aus dem Abfall des Stromes auf den eben genannten Wert ergibt sich eine Zeit $t_{Abfall}$, welche bei Eintritt dieses Ereignisses seit Ladebeginn verstrichen ist. Jedoch wird die U-Ladung zu diesem Zeitpunkt noch nicht abgebrochen. Vielmehr wertet das Ladegerät diesen Zeitpunkt als Signal zur Fortsetzung der Ladung bis zum Ablauf der erfoderlichen Gesamtladezeit $t_{gesamt}$, die als eine Zeitfunktion

$$t_{gesamt} = a \cdot t_{Abfall} + K[h]$$

dargestellt werden kann. Darin ist a ein "Verlängerungsfaktor" mit einem Zahlenwert zwischen 1 und 2, vorzugsweise 1,35, und K ein additives Zeitglied, dessen Zahlenwert 0,5 bis 5, vorzugsweise ca. 1,5 beträgt.

Mit $t_{gesamt}$ wird diejenige Ladezeit definiert, innerhalb welcher die Batterie unter minimalem Wasserverbrauch wieder voll aufgeladen wird. Da ferner $t_{Abfall}$ ein Maß für die vorausgegangene Kapazitätsentnahme ist, wird mit Hilfe der Zeitfunktion die einzuladende Strommenge optimal an die vorherige Entladung angepaßt.

Gewöhnlich beträgt $t_{gesamt}$ nach dem neuen Ladeverfahren etwa 8 h, wenn die Batterie vorher voll entladen war.

Nach Ausweis seiner Kennlinie entspricht das Ladeverfahren insoweit einer $I_0$IU-Ladung, bei welcher der stärkere Anfangsstrom $I_1$ nach Erreichen der Ladespannung $U_1$ automatisch auf $I_2$ umgeschaltet wird.

Durch die spannungsgeregelte Abstufung der Ladeströme in der ersten Ladephase wird eine Zellengasung vermieden, welche bei durchgehender Ladung mit dem höheren Ausgangsstrom $i_1$ bereits vor dem Erreichen der eigentlichen Gasungsspannung beginnen würde, weil die Stromaufnahme bei den beiden Elektrodenpolaritäten unterschiedlich ist und die Gasung daher nicht sprunghaft einsetzt. So ist beim Bleiakkumulator das Verhalten der positiven Elektrode beim Laden durch einen nennenswerten Sauerstoff-Vorlauf gekennzeichnet. Dieser findet dank der erfindungsgemäßen Stromabschaltung bei einem unter die Gasungsspannung $U_2$ herabgesetzten Spannungsgrenzwert $U_1$ gerade noch nicht statt. Er wird vielmehr durch das Weiterladen mit dem schwächeren Strom $i_2$ zum Zeitpunkt des Erreichens von $U_2$ hin verschoben, an dem die simultane Entwicklung von Sauerstoff und Wasserstoff beginnt.

Erfindungsgemäß ist die Streubreite von $U_1$ und $U_2$ mit +/- 0,05 Volt/Zelle so bemessen, daß ein Grenzfall, nämlich $U_1 = 2,30 + 0,05$ Volt und $U_2 = 2,40 -0,05$ Volt, gerade noch zulässig ist, bei dem also die Ladekennlinie im Anfangsverlauf zwei gleichhohe Spannungsspitzen aufweist.

Die Spannungsgrenzwerte $U_1$ und $U_2$ können der herrschenden Batterietemperatur angepaßt werden, da die Ladespannung des Bleiakkumulators mit fallender Temperatur steigt, was durch die schlechtere Ladungsaufnahme bedingt ist.

Unter Zugrundelegung eines Temperaturkoeffizienten der Spannung, d, wobei d zwischen 2 und 6 mV/Grad, vorzugsweise jedoch 4 mV/Grad beträgt, ergibt sich für die beiden Schaltspannungen eine Temperaturabhängigkeit gemäß

$$U(T) = U_{grenz} - d \cdot (T - 25) \text{ Volt/Zelle}$$

mit $U_{grenz} = 1,30$ Volt bzw. 1,40 Volt und T = Batterietemperatur in °C.

Die Nachregelung der Steuer- bzw. Ladespannung nach Maßgabe der Batterietemperatur übernimmt das Ladegerät anhand einer Spannungs/Temperaturkennlinie, die einmal aus experimentell ermittelten Wertepaaren der Zellenspannung und der Temperatur gewonnen wurde und diesem eingegeben worden ist.

In besonderen Fällen, beim Kälte-Einsatz der Batterie, kann eine Temperaturregelung der Spannung lediglich im Temperaturbereich unterhalb 25°C ausreichend sein. Es gilt dann, nur für T < 25°C,

$$U(T) = U_{grenz} + d \cdot (25 - T) \text{ Volt/Zelle}$$

Die erfindungsgemäße Batterie mit ihrer Konstantstromladung mit abgestuften Strömen in Verbindung mit einer Elektrolytumwälzung sorgt dafür, daß die Ladegase von Anfang an so zusammengesetzt sind, daß ihre Stöchiometrie weitgehend derjenigen des Knallgases entspricht. Dies prädestiniert die Erfindung besonders für Akkumulatoren, die mit einem Rekombinator betrieben werden sollen, weil dieser nur unter der hier gegebenen Voraussetzung mit einem optimalen Wirkungsgrad arbeitet. Der Rekombinator ist jedoch keine unbedingt notwendige Einrichtung für einen wartungsfreien Betrieb der neuen Batterie nach dem neuen Ladeverfahren.

Unerläßlich ist dagegen die Elektrolytbewegung. Durch sie werden Konzentrationsunterschiede im Elektrolyten ständig ausgeglichen, dem Entstehen einer Säureschichtung entgegengewirkt und der Zustand der Elektrodenplatten hinsichtlich des Ladungsfortschritts über die gesamte Flächenausdehnung vergleichmäßigt. Dies ermöglicht eine Verfeinerung der Ladebehandlung in der Weise, daß mit den Ladeströmen nach dem erfindungsgemäß vorgegebenen Schema eine Ladungsaufnahme erzielt werden kann, die im Hinblick auf die hierzu aufgewendeten Ströme und die Ladezeit optimal ist. Die Effizienz der Ladung kommt darin zum Ausdruck, daß die Gasbildung in der Hauptladephase bis zum Abschaltpunkt bei 2,40 Volt im Vergleich zu bisher angewendeten Ladeverfahren sehr gering ist. Die Akkumulatorenzelle bzw. Batterie erweist sich zu diesem Zeitpunkt, d.h. bei Übergang von der I- zur U-Ladung, bereits als nahezu vollgeladen und nimmt dann bis Ladungsende nur noch wenige Prozent ihrer Nennkapazität auf.

Zur Säureumwälzung wird mit Vorteil eine externe Gaspumpe, gewöhnlich eine Luftpumpe, verwendet, welche im Elektrolytraum einen Blasenstrom erzeugt. Da in diesem Falle Wasserverluste nicht nur durch Elektrolyse entstehen, sondern zusätzlich ein Wasseraustrag infolge der unterschiedlichen Wasserdampfpartialdrucke zwischen der umwälzenden Luft und der Schwefelsäure stattfinden kann, hat sich eine nur intervallmäßig betriebene Säureumwälzung als zweckmäßig und auch als ausreichend erwiesen, die etwa in zeitlichen Abständen von 0,3 h bis 1 h in Gang gesetzt wird. Besonders günstig sind Umwälzungen in 1/2-stündigen Abständen, die dann jeweils 1 min. bis 10 min andauern. Anstelle einer Gaspumpe können auch im Akkumulator angeordnete mechanische, elektrisch angetriebene Pumpen verwendet werden.

An einer Versuchsbatterie der Nennkapazität 400 Ah wurde für einen vollständigen Lade/Entladezyklus (15 Säureumwälzungen während der 8-stündigen Ladedauer) ein Wasserverlust von ca. 4,0 g/Zelle gemessen. Der darin enthaltene umwälzungsbedingte Wasseraustrag ist mit ca. 10 % Anteil verhältnismäßig gering. Durch den Einsatz von Entgasungsstopfen aus mikroporösem Kunststoff, die keine Säure- bzw. Wassernebel passieren lassen, kann der Wasseraustrag noch minimiert werden.

Anhand von Schaubildern wird der Ladevorgang bei der erfindungsgemäßen Batterie im zeitlichen Verlauf dargestellt.

Figur 1 zeit den Verlauf der Zellenspannung

Figur 2 zeigt die zeitliche Änderung des Ladestroms

Nach den Figuren steigt die Zellenspannung U [V] unter dem Einfluß eines ersten konstanten Ladestroms $i_1$ = 0,25 CA solange an, bis bei dem Spannungsgrenzwert $U_1$ = 2,30 V das Ladegerät auf einen um 40 % reduzierten Konstantstrom $i_2$ = 0,15 CA umschaltet und die Ladung mit diesem Strom fortsetzt.

Sobald die erneut ansteigende Zellenspannung den zweiten Grenzwert $U_2$ = 2,40 V erreicht hat, schaltet das Ladegerät auf diesen Spannungswert um, und es folgt als dritte Stufe eine Konstantspannungsladung, bei welcher der Ladestrom abfällt.

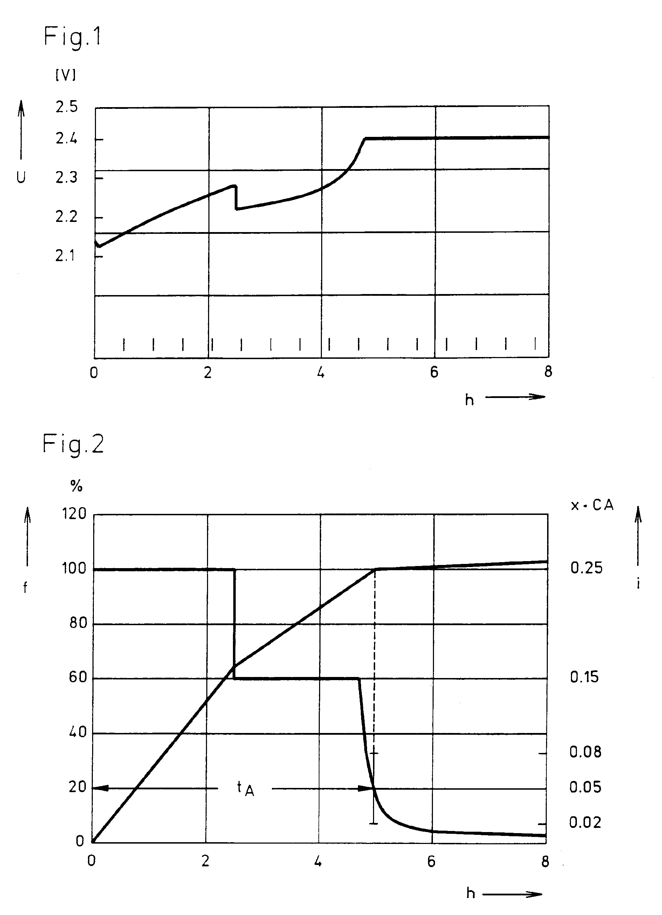

In Figur 1 sind entlang der Zeitachse in monotoner Folge Markierungen eingetragen. Diese symbolisieren jeweils eine zu dem betreffenden Zeitpunkt durch die Pumpe in Gang gesetzte Säureumwälzung von 1 min. Dauer.

Wie aus Figur 2 ersichtlich, klingt der Ladestrom am Beginn der dritten Ladestufe außerordentlich rasch ab und hat sehr bald, nämlich in dem Bereich

$$0,08 \, CA \geqq i \geqq 0,02 \, CA \; bzw. \; 0,4 \cdot I_5 \geqq i \geqq 0,1 \cdot I_5$$

nur noch die Größenordnung des 20-stündigen Stromes (i = 0,05 CA). Dieser Bereich definiert nun auf der Zeitachse das Ende einer Ladezeit $t_{Abfall}$, in der Figur mit $t_A$ bezeichnet, und der entsprechend abgeschwächte Strom signalisiert dem Ladegerät, daß die Batterie zu diesem Zeitpunkt gerade die Volladung erreicht hat. $t_A$ ist also diejenige Zeit, die ausreicht, um der Batterie die volle Nennkapazität zurückzugeben.

Zur Verdeutlichung dieses Sachverhaltes ist in Figur 2 zusätzlich der in % ausgedrückte Ladefaktor f wiedergegeben. Seine Kurve schneidet nach knapp 5 h Ladezeit (= $t_A$) bereits die 100 %-Marke, was einem Ladefaktor f = 1,00 entspricht.

Das Ladegerät schaltet den Ladestrom zu diesem Zeitpunkt jedoch noch nicht ab, sondern verlängert $t_A$ um den Faktor a und die resultierende Ladezeit $a \cdot t_A$ (= $a \cdot t_{Abfall}$) zusätzlich um das konstante Zeitglied K von ca. 1 1/2 h Dauer (in Figur 2 nicht dargestellt). Dabei wird eine Reststrommenge eingeladen, die eine absolut zuverlässige Volladung verbürgt.

Es wurde gefunden, daß zum Laden nach dem dargestellten Schema unter Beachtung der erfindungsgemäßen Vorgaben hinsichtlich Ladestromstärken, Schaltspannungen und Ladezeiten ein Ladefaktor f=1,03 ausreicht, um über viele Zyklen hinweg eine konstant bleibende Entladekapazität zu gewährleisten. Die gegenwärtige Praxis arbeitet mit Ladefaktoren bei 1,2. Es ergibt sich daraus eine erhebliche Energieeinsparung beim Ladeverfahren, die mehr als 15% beträgt.

Mit einem so gering bemessenen Ladefaktor und aufgrund des stufenweisen Herantastens an den Gasungsbeginn der Zelle während der Hauptladephase arbeitet die Batterie gemäß der Erfindung extrem gasungsarm, und es wird unter nahezu allen Betriebsbedingungen eine etwa stöchiometrische Gasentwicklung erreicht. Das schonende Ladeverfahren führt außerdem zu einer verlängerten Lebensdauer.

Der gasungsarme Batteriebetrieb mit Hilfe des neuen Ladeverfahrens begründet den minimalen Wasserverlust, welcher bei vorteilhafter Verwendung eines Rekombinators noch weiter reduziert werden kann.

Die alternative Verwendung eines Verschlußstopfens aus einem mikroporösen, hydrophoben Kunststoff, welcher ausschließlich Gase, aber keine Säurenebel passieren läßt, ist ebenfalls sehr günstig. Ein solcher Verschlußstopfen kann gleichzeitig eine Flammschutzfunktion übernehmen, indem er das Zünden der im Innern der Batterie befindlichen Ladegase von außen her verhindert.

Zur Kontrolle des Säurefüllstandes kann der neue Akkumulator schließlich mit einer entsprechenden Anzeigevorrichtung ausgestattet werden.

Besonders vorteilhaft läßt sich bei der erfindungsgemäßen Batterie das Ladeverfahren in einem Verbund mit Batterie, Ladegerät und Umwälzpumpe durchführen, dergestalt, daß durch das Ladegerät, welches Spannung, Strom und Ladezeit regelt, auch der Betrieb der Umwälzpumpe gesteuert wird.

Die bisher an einer vielzelligen Versuchsbatterie ermittelten Meßdaten geben zu der Erwartung Anlaß, daß mittels des neuen Ladeverfahrens ein wartungsfreier Betrieb von 1-jähriger Dauer resp. ein Betrieb über 200 Lade/Entladezyklen ohne Kapazitätsschwund und ohne Wassernachfüllung möglich ist. Anschließend kann durch Wassernachfüllung der Ausgangszustand wieder hergestellt werden.

## Patentansprüche

1. Verfahren zur Ladung einer Akkumulatorenbatterie des Blei-Säure-Typs mit einem frei beweglichen Elektrolyten, bei dem der Ladestrom jeweils bei Erreichen einer Gasungsspannung stufenweise vermindert wird, dadurch gekennzeichnet, daß zur vollen Wiederaufladung der Batterie in einer ersten Stufe mit einem Konstantstrom $i_1$, wobei

$$I \cdot I_5 \leqq i_1 \leqq 2 \cdot I_5, \text{ vorzugsweise } i_1 \approx 1{,}25 \cdot I_5,$$

$I_5$ entspricht dem fünffachen des Kapazitätsbezogenen Nennstromes $I$,
bis zu einem ersten Spannungsgrenzwert

$$U_1 = 2{,}30 \pm 0{,}5 \text{ Volt/Zelle}$$

geladen wird, daß die Ladung darauf in einer zweiten Stufe mit einem herabgesetzten Konstantstrom $i_2$, wobei

$$0{,}3 \cdot I_5 \leqq i_2 \leqq 1 \cdot I_5, \text{ vorzugsweise } i_2 \approx 0{,}75 \cdot I_5$$

bis zu einem zweiten Spannungsgrenzwert

$$U_2 = 2{,}40 \pm 0{,}05 \text{ Volt/Zelle}$$

fortgesetzt wird und daß unter Konstanthaltung der Spannung $U_2$ mit fallendem Strom zeitbegrenzt zuende geladen wird, wobei die Gesamtladezeit sich aus der Beziehung

$$t_{gesamt} = a \cdot t_{Abfall} + K \text{ [h] ergibt, in welcher}$$

a = Zahlenfaktor zwischen 1 und 2, vorzugsweise ca. 1,35,

$t_{Abfall}$ = bereits verstrichene Ladedauer bis zu dem Zeitpunkt, an dem der fallende Ladestrom auf einen Betrag zwischen

$$0{,}1 \cdot I_5 \text{ und } 0{,}4 \cdot I_5, \text{ vorzugsweise ca. } 0{,}25 I_5$$

abgeklungen ist, und

K = konstanter Zahlenwert zwischen 0,5 und 5, vorzugsweise ca. 1,5,
und daß zumindest während eines Teils der Ladezeit der Elektrolyt umgewälzt wird.

2. Verfahren nach Anspruch 1, dadurch gekennzeichnet, daß der Elektrolyt in Intervallen von ca.

0,3 bis 1 h, vorzugsweise ca. 0,5 h, jeweils 1 bis 10 min. lang umgewälzt wird.

3. Verfahren nach den Ansprüchen 1 und 2, dadurch gekennzeichnet, daß der Elektrolyt durch einen von einer externen Gaspumpe erzeugten Blasenstrom umgewälzt wird.

4. Verfahren nach einem der Ansprüche 1 bis 3, dadurch gekennzeichnet, daß unter Zugrundelegung der Temperaturbeziehung

$$U(T) = U_{grenz} - d \cdot (T - 25) \text{ Volt/Zelle,}$$

wobei $0{,}002 \leqq d \leqq 0{,}006$, vorzugsweise d = 0,004,
die Spannungswerte $U_1$ und $U_2$ in Abhängigkeit von der Batterietemperatur $T$ °C nachgeregelt werden.

5. Verfahren nach einem der Ansprüche 1 bis 3, dadurch gekennzeichnet, daß unter Zugrundelegung der Temperaturbeziehung

$$U(T) = U_{grenz} + d (25 - T) \text{ Volt/Zelle,}$$

wobei $0{,}002 \leqq d \leqq 0{,}006$, vorzugsweise d = 0,004,
die Spannungswerte $U_1$ und $U_2$ nur bei Batterietemperaturen $T$ unterhalb 25°C nachgeregelt werden.

6. Verfahren nach einem der Ansprüche 1 bis 5, dadurch gekennzeichnet, daß der Betrieb der Umwälzpumpe durch das Ladegerät, welches Spannung, Strom und Ladezeit regelt, angesteuert wird.

7. Verfahren nach einem der Ansprüche 1 bis 6, dadurch gekennzeichnet, daß aus den bei der Ladung entstehenden Gasen mittels eines gasdurchlässigen, jedoch flüssigkeitsundurchlässigen Verschlußstopfens Säurenebel abgetrennt werden.

8. Verfahren nach einem der Ansprüche 1 bis 7, dadurch gekennzeichnet, daß die während der Ladung entstehenden Wasserstoff- und Sauerstoffgase in einem Rekombinator katalytisch vereinigt werden.

## Claims

1. Method of charging an accumulator battery of the lead acid type having a freely movable electrolyte, in which the charging current is in each case reduced stepwise when a gassing voltage is reached, characterized in that for complete recharging of the battery, in a first stage charging is carried out with a constant current $i_1$, where

$$I \cdot I_5 \leqq i_1 \leqq 2 \cdot I_5, \text{ preferably } i_1 \approx 1.25 \cdot I_5,$$

$I_5$ corresponds to five times the capacitance-related nominal current I,
up to a first voltage limit value

$U_1$ = 2.30 ± 0.5 volt/cell,

in that charging is then continued in a second stage with a reduced constant current $i_2$, where

0.3 · $I_5$ ≤ $I_2$ ≤ 1 · $I_5$, preferably $i_2$ ≈ 0.75 · $I_5$

up to a second voltage limit value

$U_2$ = 2.40 ± 0.05 volt/cell,

and in that charging is completed in time-limited manner, keeping the voltage $U_2$ constant and with reducing current, where the total charging time is produced from the relationship

$t_{total}$ = a · $t_{drop}$ + K [h],

where

a = a numerical factor between 1 and 2, preferably approximately 1.35,

$t_{drop}$ = charging time which has already elapsed up to the point at which the falling charging current has decayed to a value between

0.1 · $I_5$ and 0.4 · $I_5$, preferably approximately 0.25 $I_5$, and

K = constant numerical value between 0.5 and 5, preferably approximately 1.5,

and in that the electrolyte is circulated during at least part of the charging time.

2. Method according to Claim 1, characterized in that the electrolyte is circulated at intervals of approximately 0.3 to 1 h, preferably approximately 0.5 h, for 1 to 10 min each time.

3. Method according to Claims 1 and 2, characterized in that the electrolyte is circulated by a flow of bubbles generated by an external gas pump.

4. Method according to one of Claims 1 to 3, characterized in that on the basis of the temperature relationship

$U(T)$ = $U_{limit}$ - d · (T - 25) volt/cell,

where

0.002 ≤ d ≤ 0.006, preferably d = 0.004,

the voltage values $U_1$ and $U_2$ are re-adjusted in dependence on the battery temperature T°C.

5. Method according to one of Claims 1 to 3, characterized in that on the basis of the temperature relationship

$U(T)$ = $U_{limit}$ + d (25 - T) volt/cell,

where

0.002 ≤ d ≤ 0.006, preferably d = 0.004,

the voltage values $U_1$ and $U_2$ are re-adjusted only at battery temperatures T below 25°C.

6. Method according to one of Claims 1 to 5, characterized in that operation of the circulating pump is triggered by the charging device, which regulates voltage, current and charging time.

7. Method according to one of Claims 1 to 6, characterized in that acid mist is separated off from the gases produced on charging by means of a gas-permeable but liquid-impermeable stopper.

8. Method according to one of Claims 1 to 7, characterized in that the hydrogen and oxygen gases produced during charging are catalytically combined in a recombination device.

**Revendications**

1. Procédé pour charger une batterie d'accumulateur du type au plomb, avec un électrolyte librement mobile, dans laquelle l'intensité du courant de charge est respectivement réduite par étapes lorsqu'on atteint une tension de début de dégagement gazeux, procédé caractérisé en ce que pour avoir une complète recharge de la batterie, on charge dans une première phase avec une intensité constante $i_1$,

I . $I_5$ ≤ $i_1$ ≤ 2.$I_5$ avec de préférence $i_1$ = 1,25.$I_5$,

$I_5$ correspondant au cinquième de la capacité rapportée à l'intensité nominale I jusqu'à une première valeur limite de tension,

$U_1$ = 2,30 ± 0,5 volt par cellule

en ce que l'on poursuit la charge dans une deuxième étape avec une intensité constante $i_2$ réduite, dans laquelle :

0,3 .$I_5$ ≤ $i_2$ ≤ 1.$I_5$, avec de préférence $i_2$ ≈ 0,75.. $I_5$

jusqu'à une deuxième valeur limite de tension,

$U_2$ = 2,40 ± 0,05 volt par cellule

et en ce que l'on charge en maintenant constante la tension $U_2$ avec une intensité décroissante jusqu'à la fin dans un temps limité, la durée totale de la charge résultant de l'équation :

$t_{total}$ = a.$t_{chute}$ + K [h] dans laquelle :

- a est un facteur numérique compris entre 1 et 2, et égal de préférence à environ 1,35,
- $t_{chute}$ est la durée de la charge qui s'est déjà écoulée jusqu'à l'instant auquel l'intensité décroissante de la charge est tombée à une valeur comprise entre 0,1.$I_5$ et 0,4.$I_5$ et est de préférence égale à environ 0,25.$I_5$ et
- K est une constante numérique comprise entre 0,5 et 5 et est de préférence égale à environ 1,5 et en ce que pendant au moins une partie de la durée de la charge, on brasse l'électrolyte.

2. Procédé selon la revendication 1, caractérisé en ce que l'électrolyte est brassé à intervalles d'environ 0,3 à 1 h, de préférence d'environ 0,5 h respectivement pendant 1 à 10 minutes.

3. Procédé selon les revendications 1 et 2, caractérisé en ce que l'électrolyte est brassé au moyen d'un écoulement à bulles produit par une pompe extérieure à gaz.

4. Procédé selon l'une des revendications 1 à 3, caractérisé en ce qu'en se basant sur la relation de température suivante :

$U(T) = U_{limite} - d. (T - 25)$ volt par cellule

dans laquelle :

$0,002 \leqq d \leqq 0,006$ et de préférence $d = 0,004$, on règle après coup les valeurs de tension $U_1$ et $U_2$ en fonction de la température T°C de la batterie.

5. Procédé selon l'une des revendications 1 à 3, caractérisé en ce qu'en se basant sur la relation de température suivante :

$U(T) = U_{limite} + d (25 - T)$ volt par cellule

dans laquelle $0,002 \leqq d \leqq 0,006$ et de préférence $d = 0,004$, on règle après coup les valeurs de tension $U_1$ et $U_2$ seulement dans le cas des températures de batterie T en dessous de 25°C.

6. Procédé selon l'une des revendications 1 à 5, caractérisé en ce que le fonctionnement de la pompe de brassage soit commandé par l'appareil de charge, qui règle la tension, l'intensité et la durée de la charge.

7. Procédé selon l'une des revendications 1 à 6, caractérisé en ce qu'à partir des gaz se dégageant lors de la charge, on sépare les nuages d'acide au moyen d'un bouchon de fermeture perméable au gaz, mais par contre imperméable aux liquides.

8. Procédé selon l'une des revendications 1 à 7, caractérisé en ce que les gaz d'hydrogène et d'oxygène qui se dégagent pendant le charge sont réunis catalytiquement dans un recombinateur.

Fig.1

Fig.2